# FASCICULE DE BREVET EUROPEEN

(11) **EP 3 245 108 B1**
(45) Date de publication et mention de la délivrance du brevet: **06.02.2019**
(21) Numéro de dépôt: 15820222.6
(22) Date de dépôt: 11.12.2015
(51) Int. Cl.: B60R 19/34, B60R 19/03, B60R 19/18

(54) **ÉLÉMENT ABSORBEUR D'ÉNERGIE POUR PARE-CHOCS AUTOMOBILE**
ENERGIEABSORBER ELEMENT FÜR STOSSFÄNGER EINES FAHRZEUGES
ENERGY ABSORBER ELEMENT FOR VEHICLE BUMPER

(30) Priorité: 14.01.2015 FR 1550281
(43) Date de publication de la demande: 22.11.2017
(73) Titulaire: Renault s.a.s, 92100 Boulogne-Billancourt (FR)
(72) Inventeur: BEZEAULT, Loic, 78000 Versailles (FR); DUHEM, Xavier, 92130 Issy Les Moulineaux (FR)
(86) Numéro de dépôt international: PCT/FR2015/053436
(87) Numéro de publication internationale: WO 2016/113476

(56) Documents cités:
- DE-A1-102005 053 778
- JP-A- 2010 095 038

## Description

L'invention a pour objet les structures d'absorption d'énergie de choc, et plus particulièrement les structures d'absorption d'énergie de choc disposées au niveau des pare-chocs avant et/ou des pare-chocs arrière d'un véhicule automobile. De telles structures d'absorption de choc doivent permettre, lors de l'écrasement du pare-chocs en direction du véhicule, de consommer une partie, voire si possible la totalité de l'énergie du choc afin de limiter les déformations des structures situées derrière les pare-chocs et l'élément absorbeur d'énergie, et d'éviter l'intrusion de corps étrangers, ou l'intrusion de portions même du véhicule à l'intérieur de l'habitacle du véhicule. En cas de petit choc, la structure d'absorption de choc doit permettre de limiter les dommages à la structure elle-même et aux éléments se trouvant en avant de la structure d'absorption d'énergie de choc, afin de pouvoir remettre en état le véhicule à moindre coût, et en conservant l'intégrité structurelle des éléments se trouvant en arrière de la structure d'absorption de choc. On connaît les structures d'absorption d'énergie de choc en métal, par exemple en acier ou en aluminium. Ces structures présentent généralement des formes favorisant un écrasement "en accordéon" de la structure d'absorption de choc afin de multiplier les zones de déformation plastique, et d'augmenter ainsi la quantité d'énergie totale absorbée. Sur ces structures connues d'absorption de choc, est généralement assemblée une poutre métallique qui transfère l'effort de l'impact sur la structure d'absorption de choc lors d'un choc suivant un axe non aligné avec un axe d'une des structures d'absorption de choc soutenant la poutre. Ces dispositifs connus sont généralement assez lourds, et sont également encombrants dans le sens axial du véhicule, en ce sens qu'ils nécessitent des distances disponibles pour l'écrasement de la structure qui se ressentent sur l'encombrement total du véhicule dans le sens longitudinal de celui-ci.

Le document DE102005053778 divulgue un élément absorbeur d'énergie de choc conforme le préambule de la revendication 1.

L'invention a pour but de proposer des systèmes d'absorption d'énergie de choc qui présentent un moindre encombrement dans le sens longitudinal du véhicule pour une même capacité d'absorption d'énergie de choc.

A cette fin, l'invention propose un élément absorbeur d'énergie, notamment pour véhicule automobile, comprenant une structure de coque comprenant une portion en forme de poutre creuse à section fermée autour d'un axe longitudinal de la poutre. La surface totale de matière des sections droites de la poutre perpendiculairement à l'axe longitudinal est de préférence décroissante entre une première extrémité de la portion de poutre et une seconde extrémité de la portion de poutre. Par surface totale de matière, on entend l'intégrale de surface sur une section droite de la portion de poutre creuse, en ne comptabilisant que les portions de section droite effectivement occupées par la matière formant la portion de poutre.

Par (dé)croissant d'une extrémité à l'autre de la portion de poutre, on entend, on entend une variation monotone non constante d'une extrémité à l'autre de la portion de poutre. De préférence, la variation est une (dé)croissance stricte sur une longueur cumulée de la portion de poutre qui représente au moins le quart, de préférence au moins le tiers, et avantageusement au moins la moitié de la distance minimale entre un point d'assemblage de la poutre sur une structure du véhicule à une extrémité, et un point de la portion de poutre creuse le plus distant de cette structure de véhicule à l'autre extrémité de la portion de poutre creuse.

La première extrémité de la portion de poutre creuse est typiquement une extrémité par laquelle la portion de poutre creuse est assemblée sur le véhicule. La seconde extrémité de la portion de poutre creuse est typiquement une extrémité de la portion de poutre creuse qui est distante du véhicule.

Avantageusement, le moment quadratique de la poutre en flexion autour d'au moins un premier axe est décroissant entre une première extrémité de la poutre et une seconde extrémité de la poutre.

L'axe longitudinal de la poutre peut correspondre typiquement avec un axe d'avancement d'un véhicule, ou axe longitudinal du véhicule. La dimension la plus importante de la poutre n'est pas nécessairement sa dimension suivant l'axe longitudinal. Plus généralement, l'axe longitudinal de la poutre peut correspondre à un axe d'impact probable sur l'élément absorbeur de choc.

La portion de poutre creuse peut présenter une forme sensiblement tronconique. La surface tronconique peut correspondre à une peau extérieure, ou à une peau intérieure de la portion de poutre creuse, ou encore à une surface comprise dans le volume de matière constituant la poutre creuse. La surface tronconique peut être éventuellement une portion de cylindre. Cylindre et tronc de cône s'entendent ici au sens général, c'est-à-dire que leurs génératrices peuvent s'appuyer sur des courbes fermées quelconques, pas nécessairement de révolution. On peut envisager des variantes de réalisation non tronconique. On peut par exemple envisager des variantes de réalisation dans lesquelles la portion de poutre creuse est une surface réglée autre qu'une surface tronconique, les génératrices de la surface réglée s'étendant entre la première et la seconde extrémité de la portion de poutre creuse, de manière à transmettre les efforts d'un choc frontal du véhicule en évitant les phénomènes de flambement de la portion de poutre creuse, au profit d'une consommation de cette portion de poutre creuse par destruction progressive, section par section, du matériau formant la portion de poutre creuse. La portion de poutre creuse pourrait par exemple être définie par une portion de paraboloïde hyperbolique de section constamment croissante ou de section constamment décroissante. Avantageusement, si on part de la seconde extrémité, le contour extérieur de chaque section droite de la poutre peut s'inscrire dans le contour extérieur d'une section droite quelconque de la poutre située plus près de la première extrémité de la poutre. La consommation par déformation et/ou rupture des parois de la poutre se fait ainsi section par section en se propageant vers les sections plus résistantes, situées plus près du véhicule.

L'épaisseur radiale du contour de la section fermée de la poutre peut être décroissante entre la première et la seconde extrémité de la portion de poutre.
La portion de poutre peut comprendre au moins une première et une seconde zone d'ailettes, au niveau desquelles la section droite de la poutre s'étend vers l'extérieur du contour moyen fermé de la poutre, en formant une première ailette dans un premier plan géométrique de renfort et en formant une seconde ailette dans un second plan géométrique de renfort.

Avantageusement, le moment quadratique de la poutre en flexion autour d'au moins un axe est décroissant entre une première extrémité de la poutre et une seconde extrémité de la poutre. Deux moments quadratiques autour de deux axes perpendiculaires peuvent être simultanément décroissants.

Les éventuelles ailettes augmentent encore la résistance globale en flexion de la poutre, ce qui permet d'obtenir lors d'un choc une consommation d'énergie par effondrement local en compression de la matière de la poutre, en évitant un flambement de la poutre.

L'élément absorbeur d'énergie peut comprendre au moins une portion de coque réalisée en matériau composite à matrice à base polymère et renforcé par des fibres longues ou par des structures textiles obtenues par tissage de fibres continues. La matrice à base polymère peut comprendre de la résine de type thermodur (par exemple époxyde) ou de la résine de type thermoplastique (par exemple polyamide). On entend ici par fibres longues des fibres de longueur supérieure ou égale au millimètre. De préférence le composite comprend des fibres "continues", c'est-à-dire de longueur supérieure ou égale au cm. De manière particulièrement avantageuse, le composite comprend par exemple des fibres tissées, ou comprend des fibres disposées de manière plus ou moins isotrope sous forme de "mats" de fibres, par exemple de fibres de carbone, de fibres aramides, de fibres de verre, ou de mélange de ces fibres et/ou d'autres fibres longues de renfort connues, par exemple synthétiques ou végétales. Les fibres du composite peuvent être orientées suivant des directions croisées, suivant des méthodes de moulage de composites connues à partir de tissus ou de mats de fibres de renfort imprégnés de matrice. Le matériau composite peut comprendre une fraction massique de fibres supérieure à 30%, de préférence supérieure à 40%, et de préférence comprise entre 50% et 80% en masse.

L'élément absorbeur peut comprendre deux demi-coques en matériau composites assemblées suivant au moins deux portions planes de chaque demi-coque, les portions planes d'une même demi-coque contribuant à former chacune une partie de l'épaisseur d'une zone d'ailette différente.

Les deux demi-coques peuvent être de formes et de dimensions différentes. Une des demi-coques peut être sensiblement plus grande que l'autre demi-coque. Une même demi-coque peut être assemblée à deux autres demi-coques pour former deux éléments absorbeurs de chocs selon l'invention. Les portions planes peuvent avantageusement comprendre une ou plusieurs portions qui se trouvent dans les zones d'ailettes. Selon un mode de réalisation préféré, la portion de poutre creuse se prolonge à une extrémité par une portion de coque qui ferme cette extrémité de la portion de poutre creuse, par une surface sensiblement perpendiculaire à l'axe longitudinal de la poutre creuse. L'assemblage entre les deux demi-coques peut être réalisé par collage, ou par d'autres méthodes connues, par exemple par friction, en fonction de la nature du composite utilisé. La méthode d'assemblage entre les deux demi-coques est de préférence choisie pour assurer une cohésion surfacique entre les deux demi-coques -par opposition à une série de liaisons ponctuelles-, de manière à ce que suite à chaque rupture ou destruction d'une section droite de la poutre, une autre section droite à contour fermé puisse reprendre les efforts appliqués.

Chaque demi-coque peut être formée en matériau composite renforcé de fibres disposées en couches successives, dans lequel le nombre de couches de fibres de renfort augmente entre la seconde et la première extrémité de la poutre.

Une des demi-coques peut comprendre une portion perpendiculaire à l'axe longitudinal et recouvrant une extrémité axiale de la portion de poutre creuse, de manière à fermer cette extrémité de la portion de poutre creuse. La portion perpendiculaire peut former une première portion d'attache de la portion de poutre creuse. Dans la portion d'attache peuvent être superposées une portion de paroi de chacune des deux demi-coques. La portion d'attache peut déborder radialement par rapport à la portion de poutre creuse.

La première portion d'attache peut être configurée pour permettre de fixer l'élément absorbeur d'énergie à une structure telle qu'un longeron, ou être au contraire configurée pour assembler l'extrémité de la portion de poutre creuse à une traverse, par exemple métallique. La première portion d'attache peut simultanément assurer la fonction de zone d'assemblage entre les deux demi-coques pour former la structure de poutre creuse.

Au moins une parmi les deux demi-coques formant une portion de poutre creuse, peut présenter un rebord sensiblement perpendiculaire à l'axe de la portion de poutre creuse, le ou les rebords de la ou des demi-coques formant une seconde portion d'attache de la portion de poutre creuse, la seconde portion d'attache s'étendant radialement vers l'extérieur du contour fermé de la portion de poutre. La seconde portion d'attache peut être formée par deux rebords de deux demi-coques s'étendant dans un même plan, perpendiculaire à la direction longitudinale de la portion de poutre creuse, de part et d'autre d'un axe central de la portion de poutre creuse.

Chacune des demi-coques peut présenter, au niveau de la première portion d'attache ou de la seconde portion d'attache, des orifices traversants, de préférence usinés, et/ou peut être munie d'éléments d'assemblage tels que des écrous ou goujons sertis sur les orifices (de type rivkle ® par exemple), de manière à permettre d'assembler l'élément absorbeur d'énergie sur la structure de véhicule et sur traverse, en limitant les effets de concentration de contraintes au niveau des orifices et/ou des éléments d'assemblage.

La seconde extrémité de l'élément absorbeur d'énergie peut typiquement être assemblée sur une traverse de véhicule automobile. La première extrémité de l'élément absorbeur d'énergie peut typiquement être assemblée sur un longeron de véhicule automobile. Une plaque métallique peut éventuellement être interposée entre des rebords du longeron et l'élément absorbeur d'énergie. Une telle plaque peut être configurée pour permettre de fixer sur la plaque un anneau de traction ou de remorquage du véhicule. L'anneau peut être vissé dans la plaque. La plaque peut être configurée de manière à permettre d'éviter un effacement de l'élément absorbeur d'énergie à l'intérieur du longeron dans le cas où l'élément absorbeur d'énergie se consommerait suivant une chronologie non prévue (par exemple suite à une rupture du côté de sa section la plus importante). Pour cela, la plaque peut être par exemple assemblée à la fois à un contour du longeron et à un contour de la portion de poutre creuse.

D'autres buts, caractéristiques et avantages de l'invention apparaîtront à la lecture de la description suivante, donnée uniquement à titre d'exemple non limitatif, et faite en référence aux dessins annexés sur lesquels :
La figure 1 est une vue d'ensemble d'un système d'absorption d'énergie de choc, en l'espèce situé dans une partie avant d'un véhicule automobile, comprenant deux éléments absorbeurs d'énergie de choc selon l'invention;
La figure 2 est une vue simplifiée en perspective d'un des éléments absorbeurs d'énergie de la figure 1;
La figure 3 est une autre vue simplifiée en perspective de l'élément absorbeur d'énergie de la figure 2;
La figure 4 est une vue en section transversale de l'élément absorbeur d'énergie des figures 2 et 3;
La figure 5 est une vue en coupe par un plan horizontal d'un élément absorbeur d'énergie selon l'invention, en l'espèce situé dans une partie arrière d'un véhicule automobile, assemblé sur un longeron de véhicule automobile;
La figure 6 est une vue en coupe par un plan horizontal d'un autre élément absorbeur d'énergie selon l'invention, en l'espèce situé dans une partie arrière d'un véhicule automobile.

Dans la présente description, les directions et orientations sont indiquées en références à un repère orthonormé direct XYZ dans lequel X représente la direction longitudinale avant-arrière du véhicule, dirigée vers l'arrière du véhicule, Y représente la direction transversale au véhicule, dirigée vers la droite et Z est la direction verticale, dirigée vers le haut.

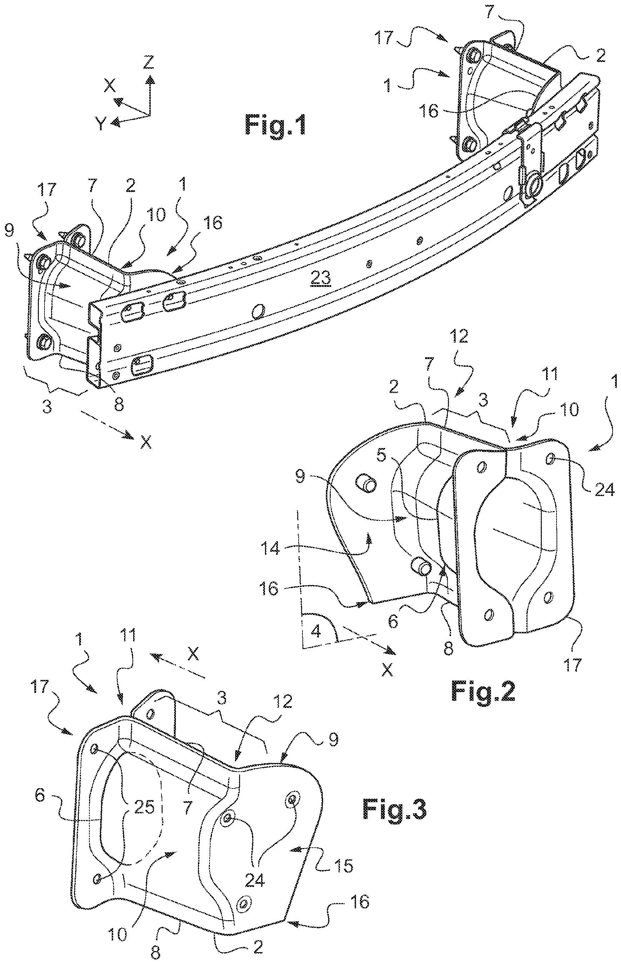

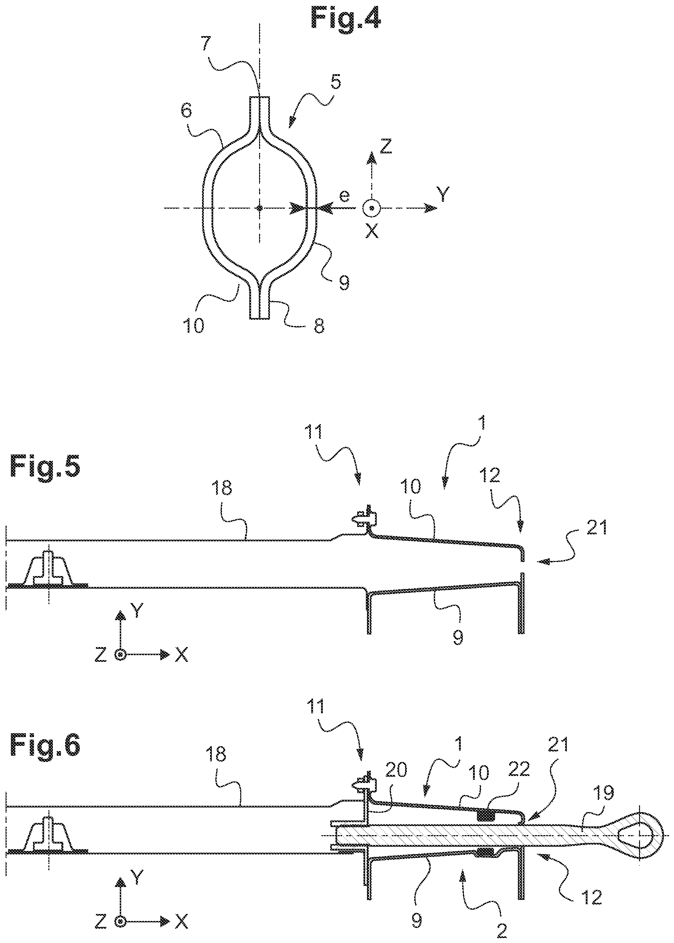

L'élément absorbeur d'énergie selon l'invention peut être prévu indifféremment à l'avant ou à l'arrière du véhicule. Des éléments absorbeurs d'énergie selon l'invention peuvent être disposés simultanément certains à l'avant et certains à l'arrière du véhicule. On décrira dans un premier temps un tel élément absorbeur d'énergie situé à l'avant d'un véhicule, interposé entre une traverse extrême avant du véhicule (figures 1 à 4) et une structure comprenant des longerons du véhicules, puis dans un second temps, un tel élément absorbeur d'énergie situé à l'arrière du véhicule, interposé entre une traverse extrême arrière du véhicule (figures 5 et 6) et une structure comprenant des longerons du véhicules. Les caractéristiques communes à l'avant et à l'arrière ne seront pas détaillées plus en détail en relation avec les figures 5 et 6. Seuls les aspects particuliers liés à l'implantation à l'arrière du véhicule seront précisées en complément, à la lumière de ces figures 5 et 6.
Tel qu'illustré sur les figures 1 à 4, un système d'absorption d'énergie de choc selon l'invention comprend ici une traverse 23, par exemple métallique, assemblée à chacune de ses extrémités à un élément 1 absorbeur d'énergie de choc. Les deux éléments absorbeurs d'énergie sont ainsi interposés axialement entre la traverse 23 et le véhicule à protéger. Chacun des éléments absorbeurs d'énergie 1 comprend une première demi-coque 9 et une seconde demi-coque 10 assemblées l'une avec l'autre de manière à former entre le véhicule et la traverse 23, au moins une portion de coque 3 en forme de poutre creuse, cette portion de poutre creuse s'étendant autour d'un axe moyen qui est sensiblement parallèle à l'axe longitudinal X du véhicule. La première demi-coque 9 et la seconde demi-coque 10 assemblées forment ainsi une structure de coque 2 dont la section droite 5 au niveau de la portion de poutre creuse forme un contour fermé 6, visible par exemple sur la figure 4. On entend par section droite de la structure de coque 2, une section par un plan de section droite 4 qui est perpendiculaire à l'axe longitudinal X. Chaque demi-coque 9 et 10 comprend notamment une première portion plane, qui une fois assemblée avec la portion plane de l'autre demi-coque, forme une première ailette 7 de l'élément absorbeur 1. Chaque demi-coque 9 et 10 comprend au moins une seconde portion plane, qui une fois assemblée avec la seconde portion plane de l'autre demi-coque, forme une seconde ailette 8 de l'élément absorbeur 1. Vues en coupe suivant une section droite, la première ailette 7 et la seconde ailette 8 s'étendent radialement vers l'extérieur des contours moyens fermés 6 de la portion de poutre, et sont orientées chacune suivant un plan contenant la direction longitudinale X du véhicule. Une portion de section droite 5 de la poutre comprend ainsi le contour moyen fermé 6 de la poutre muni de deux excroissances radiales correspondant à la première ailette 7 et à la seconde ailette 8. Les ailettes 7 et 8 se trouvent ici dans un même plan (vues en coupe elles sont alignées suivant une même droite) mais pourraient se trouver dans des plans différents, se croisant de préférence suivant une direction parallèle à la direction longitudinale X du véhicule.
Une des demi-coques 10 peut recouvrir l'autre demi-coque 9 de manière à fermer une des extrémités 12 de la portion de poutre creuse 3, et à former une première portion d'attache 16 superposant une épaisseur de chacune des deux demi-coques et débordant radialement par rapport à la portion de poutre creuse.

Chacune des demi-coques 9, 10 peut présenter une seconde portion d'attache 17 s'étendant radialement vers l'extérieur du contour fermé 6 de la portion 3 de poutre dans un même plan sensiblement perpendiculaire à la direction longitudinale X.

La portion de poutre creuse 3 comprend ici une première extrémité 11 au niveau de laquelle les demi-coques 9 et 10 s'écartent radialement l'une de l'autre vers l'extérieur du contour moyen fermé 6, et se prolongent chacune par un rebord d'assemblage sensiblement perpendiculaire à la direction longitudinale X. Chaque portion de poutre creuse comprend ici une seconde extrémité 12, au niveau de laquelle les demi-coques, respectivement 9 et 10 se prolongent, perpendiculairement à l'axe longitudinal X, respectivement par une portion couvrante 15 de coque et par une portion recouverte 14 de coque. La portion couvrante 15 de coque est assemblée, par exemple par collage, sur la portion recouverte 14 de coque, de manière à fermer une extrémité 12 de la portion de poutre creuse 3 par une paroi sensiblement perpendiculaire à la direction longitudinale X. Par sensiblement perpendiculaire, on entend une portion formant un angle compris par exemple entre 60° et 90° par rapport à une direction d'axe X sortant de l'élément absorbeur d'énergie 1 du côté de l'extrémité comprenant les portions 14 et 15.

Des perçages d'assemblage 25, 24 peuvent être ménagés à la première extrémité axiale d'une portion de poutre creuse 3, respectivement au niveau de la seconde extrémité 12 de la portion de poutre creuse, par exemple dans la zone où les portions perpendiculaire 14 et 15 se recouvrent l'une l'autre et/ou au niveau de la portion perpendiculaire 15 fermant la portion de poutre creuse 3. Ces perçages d'assemblage sont de préférence usinés de manière à garantir un état de surface à faible rugosité, afin de limiter les effets de concentrations de contrainte lorsque l'on insère dans ces perçages des éléments d'assemblage, tels que des vis, des gougeons, ou des oeillets filetés par exemple. Ces perçages peuvent être renforcés en y insérant des systèmes d'assemblage comprenant des oeillets métalliques recouvrant les bords du perçage, par exemple des oeillets filetés ou des goujons de type "rivkle ®". Au moyen des perçages 24, la seconde extrémité 12 de la portion de poutre 3 peut être assemblée par exemple sur la traverse 23. Au moyen des perçages 25, la première extrémité 11 de la portion de poutre 3 peut être assemblée par exemple sur une extrémité axiale de longeron 18.

Au niveau de la première extrémité 11 prolongeant la portion de poutre 3, les perçages d'assemblage 25 peuvent être ménagés dans les rebords d'assemblage débordant radialement part et d'autre du contour moyen fermé de la poutre. Ces perçages 25 peuvent servir à assembler l'élément absorbeur soit directement sur un contour de longeron de véhicule, soit sur une plaque métallique intermédiaire 20 elle-même assemblée au longeron. Une telle plaque métallique, en retenant l'élément absorbeur de choc à l'extérieur du longeron peut éviter un effacement accidentel de l'élément absorbeur d'énergie à l'intérieur du longeron, par exemple en cas de scénario non prévu d'écrasement de l'élément absorbeur en compression. Une telle plaque métallique 20 est par exemple représentée sur la figure 6 dans laquelle la plaque métallique 20 est interposée axialement entre le longeron 18 et l'élément 1 absorbeur d'énergie. La plaque métallique peut être percée en son centre pour y attacher un élément tel qu'un anneau de remorquage, ou peut ne pas être percée en son centre.

La figure 5 montre, vu en coupe par un plan horizontal, un autre mode de réalisation, typiquement localisé à l'arrière du véhicule, dans lequel l'élément absorbeur 1 est assemblé directement sur un longeron 18 d'un véhicule. On retrouve sur les figures 5 et 6 des éléments communs aux figures 1 à 4, les mêmes éléments étant désignés par les mêmes références. Dans l'exemple de réalisation illustré en figure 6, la plaque métallique de renfort 20 est configurée de manière à permettre d'arrimer l'extrémité axiale d'un anneau de traction 19 qui est vissé dans une portion filetée de cette plaque métallique 20. La plaque métallique 20 est en outre configurée de manière à limiter les déplacement radiaux -i.e-perpendiculaires à la direction X- des rebords radiaux d'assemblage qui terminent la portion de poutre creuse du côté de sa première extrémité 11. Cette plaque 20 limite ainsi les possibilités de destruction de l'élément absorbeur d'énergie par traction-ouverture radiale de la portion de poutre creuse assemblée sur la plaque. Cette plaque 20 améliore en outre la résistance structurelle de la portion de poutre 3 en renforçant l'effet d'encastrement de cette poutre au niveau de sa première extrémité 11.

Dans le mode de réalisation illustré en figure 6, dans lequel l'élément absorbeur d'énergie de choc est situé à l'arrière du véhicule, l'anneau de traction 19 est maintenu radialement, d'une part par sa portion vissée dans la plaque 20, et d'autre part par une pièce de guidage 22 entourant la tige de l'anneau de traction 19, et assurant un transfert radial des efforts exercés par l'anneau sur la structure de coque 2, plus précisément sur les parois de la portion de poutre creuse 3. Cette pièce de guidage peut être soit arc-boutée intérieurement sur la structure de coque 2, soit enfilée autour de la tige de l'anneau 19, de manière à rester en contact avec la tige de l'anneau 19. La tige de l'anneau 19 est de préférence assemblée de manière pouvoir être mobile en translation par rapport à la pièce de guidage 22, de manière à éviter que la pièce de guidage 22 ne déchire les parois de la portion de poutre 3 si la tige venait à être arrachée hors de la plaque 20. La surface d'appui de la pièce de guidage 22 sur la structure de coque 2, est conçue de manière à limiter les concentrations de contraintes liées à l'appui radial de la pièce de guidage 22 sur la coque 2. Par exemple, la section longitudinale de la pièce de guidage - au niveau de la zone de contact- épouse le contour intérieur de la coque 2. La longueur axiale de la zone de contact entre la pièce de guidage 22 et les parois de la portion de poutre creuse 3, est de préférence au moins égale à la longueur axiale de la zone de contact potentiel entre la tige de l'anneau 19 et la pièce de guidage 22. Si possible, autour de la tige de l'anneau 19, la portion angulaire de la pièce de guidage 22 qui est en contact avec la structure de coque 2, représente au moins le tiers de la circonférence la pièce de guidage. Selon un mode de réalisation avantageux, la pièce de guidage 22 peut comprendre une coupelle, par exemple métallique, dont le contour extérieur épouse sensiblement le contour intérieur de la portion de poutre creuse 3. On obtient ainsi une structure de poids minimal assurant un bon transfert des efforts radiaux de l'anneau de traction 19 vers la structure de coque 2.

Chacune des demi-coques 9, 10 peut être avantageusement réalisée en matériau composite à matrice organique, par exemple à matrice de type résine thermodur (par exemple époxyde) ou de type résine thermoplastique (par exemple polyamide) renforcée par des fibres de carbone, ou par d'autres fibres présentant une contrainte à la rupture en compression élevée. Les fibres sont de préférence utilisées sous forme de structures tissées ou de structures textiles non tissées. Les couches de fibres tissées ou les "mats" textiles peuvent être superposées de manière à combiner plusieurs directions préférentielles d'alignement de fibres, et à obtenir une résistance élevée en compression du composite pour plusieurs directions d'impact potentielles sur l'élément absorbeur de choc 1. Le pourcentage de fibres utilisé peut être relativement élevé, par exemple au moins égal à 30 % en masse de fibres, et de préférence supérieur à 45 % voire à 55 % de fibres en masse. Les deux demi-coques moulées en matériau composite peuvent être assemblées entre elles de préférence suivant des techniques permettant de solidariser des surfaces continues de chacune des deux demi-coques, par exemple par collage ou par d'autres méthodes d'assemblage.

Afin d'obtenir une forte dissipation d'énergie sur un faible encombrement axial de l'élément absorbeur 1, l'élément absorbeur 1, et en particulier sa ou ses portions 3 en forme de poutres creuses, est conçu de manière à localiser l'endommagement de la poutre du côté de la seconde extrémité 12 de chaque portion de poutre creuse. De cette manière, lors d'un impact sur la traverse extrême 23 ou lors d'un impact directement au droit d'un des éléments absorbeurs 1, l'énergie de l'impact est utilisée pour déformer ou détruire par écrasement la portion de poutre creuse 3 en consommant la portion de poutre 3 progressivement à partir de sa seconde extrémité 12. A cet effet, la valeur totale de surface correspondant aux zones pleines de la section droite de la portion de poutre 3, est croissante entre la seconde extrémité 12 -distante du véhicule- de la portion de poutre creuse 3, par exemple assemblée sur la traverse 23, et la première extrémité 11 -assemblée sur le véhicule- de la portion de poutre creuse 3.

Cette évolution de la section peut être obtenue en augmentant progressivement la circonférence extérieure du contour moyen fermé 6 de la poutre entre sa seconde extrémité et sa première extrémité. La portion 3 de poutre creuse peut ainsi présenter une forme sensiblement tronconique s'évasant vers la première extrémité 11 de la portion de poutre. L'épaisseur radiale "e" du contour moyen fermé de la poutre peut également être croissante entre la seconde extrémité 12 et la première extrémité de la portion de poutre 3. Cette variation d'épaisseur peut être obtenue en augmentant entre la seconde et la première extrémité, le nombre d'épaisseurs de tissus de renforts ou le nombre d'épaisseurs de "mats" renforçant le matériau composite. Afin de localiser la déformation et la rupture vers la seconde extrémité de la portion de poutre creuse 3, la portion de poutre creuse peut être conçue de manière à être encore plus rigide en flexion du côté de sa première extrémité 11 que du côté de sa seconde extrémité 12. Une telle rigidité peut être obtenue par exemple en augmentant le moment quadratique de la poutre autour d'un des axes transversaux Y ou Z des sections droite 5 de la poutre. L'augmentation d'un moment quadratique peut être obtenue par une augmentation de l'épaisseur totale du contour moyen fermé, ou par l'augmentation de la distance du contour fermé à l'axe (par exemple Y ou Z) par rapport auquel on calcule le moment quadratique.

L'invention ne se limite pas aux exemples de réalisation décrits et peut se décliner en de nombreuses variantes. La traverse peut présenter localement un forme apte à s'emboîter axialement autour de la seconde extrémité d'au moins une portion de poutre creuse, et apte également à s'emboîter autour de première extrémité de la portion de poutre creuse, de manière à ce que la traverse puisse s'emboîter lors du choc autour de la portion résiduelle de poutre creuse malgré la destruction de la seconde extrémité de celle-ci, initialement assemblée à la traverse, et à pouvoir continuer à transmettre l'effort de compression. La portion de poutre creuse 3 peut être assemblée par une extrémité ouverte sur la traverse et/ou être assemblée par une extrémité fermée sur le longeron. La section de matière de la portion de poutre creuse peut être croissante entre une extrémité ouverte de la potion de poutre creuse et une extrémité fermée de la portion de poutre creuse. La portion de poutre creuse peut présenter deux extrémités axiales ouverte ou peut présenter deux extrémité axiales fermées.

L'élément absorbeur de choc peut être réalisé en une seule coque monobloc, ou peut être réalisé en assemblant plus de deux portions de coques, chacune des portions de coque s'étendant de préférence entre le soubassement du véhicule -comprenant des longerons du véhicule- et une traverse protégeant le véhicule des chocs avant ou arrière, séparée du soubassement du véhicule par un ou plusieurs absorbeurs d'énergie de choc selon l'invention. L'élément absorbeur de choc peut notamment être disposé entre le véhicule et une traverse extrême avant, entre le véhicule et une traverse extrême arrière, entre le véhicule et une coque pare-chocs avant, entre le véhicule et une coque pare-chocs arrière. Selon une variante de réalisation, la section de matière de la portion de poutre creuse pourrait être décroissante de l'extrémité distante de la portion de poutre creuse vers le véhicule. Plusieurs éléments absorbeurs de chocs peuvent partager un élément de coque commun. L'élément de coque commun peut relier transversalement deux éléments absorbeurs de choc et faire partie d'un élément de traverse reliant les deux éléments absorbeurs de choc. La section totale de la portion de poutre creuse peut varier sans que l'épaisseur des coques constitutives de la portion de poutre creuse ne varie. Inversement, la poutre creuse peut présenter une section à contour moyen constant, mais d'épaisseur radiale variable de manière monotone. Un élément absorbeur d'énergie de choc selon l'invention pourrait comprendre au moins une portion de poutre creuse réalisée sous forme de coque monobloc, par exemple en matière composite à matrice polymère renforcée par des fibres longues. On peut aussi envisager des éléments absorbeurs d'énergie comprenant des poutres creuses réalisées sous forme de pièce monobloc par injections d'une matières thermoplastique ou par moulages de matières polymères thermodurcissables, la matière thermoplastique ou le polymère thermodurcissable étant renforcés par un taux élevé de fibres de renfort non agencées sous forme textile (plus de 30% de fibres de renfort en masse, par exemple plus de 40% de fibres de renfort en masse, et avantageusement plus de 50% en masse), les fibres de renfort comprenant de préférence des fibres de renfort longues (rapport longueur/diamètre supérieur à 20).

Un élément absorbeur d'énergie selon l'invention est nettement plus léger que nombre d'absorbeurs d'énergie connus, réalisés dans des matériaux métalliques. La localisation de l'endommagement consommateur d'énergie vers l'extrémité distante du véhicule, de l'élément absorbeur de choc, permet d'utiliser le potentiel d'absorption d'énergie de chaque tranche de portion de poutre creuse, et permet d'augmenter la quantité totale d'énergie consommée entre le début du choc et le moment où la traverse 23 transmettant l'effort de choc ou de compression arrive éventuellement en butée contre les longerons supportant les éléments absorbeurs d'énergie 1. Pour une même énergie d'impact absorbée, l'encombrement axial de l'élément absorbeur d'énergie peut ainsi être réduit par rapport aux éléments absorbeurs d'énergie classique. On obtient ainsi à la fois des véhicules plus légers, plus économes en énergie et plus faciles à manier notamment pour les manoeuvres de parking.

## Revendications

1. Elément absorbeur d'énergie de choc (1), notamment pour véhicule automobile, comprenant une structure de coque (2) comprenant une portion en forme de poutre creuse (3) à section fermée autour d'un axe longitudinal (X) de la portion de poutre, la surface totale de matière des sections droites (5) de la portion de poutre perpendiculairement à l'axe longitudinal étant décroissante entre une première extrémité (11) de la portion de poutre et une seconde extrémité (12) de la portion de poutre (3),
**caractérisé en ce que** la structure de coque comprend deux demi-coques, une des demi-coques (9, 10) comprenant une portion perpendiculaire à l'axe longitudinal et recouvrant une extrémité axiale (12) de la portion de poutre creuse (3), de manière à fermer cette extrémité de la portion de poutre creuse, et de manière à former en outre portion d'attache (16) de la portion de poutre creuse débordant radialement par rapport à la portion de poutre creuse, au niveau de laquelle sont superposées une portion de paroi de chacune des deux demi-coques.

2. Elément absorbeur d'énergie, selon la revendication 1, dans lequel le moment quadratique de la poutre en flexion autour d'au moins un premier axe (Y, Z) est décroissant entre une première extrémité (11) de la poutre et une seconde extrémité (12) de la poutre.

3. Elément absorbeur d'énergie selon l'une des revendications 1 ou 2, dans lequel la portion de poutre creuse présente une forme sensiblement tronconique.

4. Elément absorbeur d'énergie selon l'une quelconque des revendications précédentes, dans lequel l'épaisseur radiale (e) du contour (6) de la section fermée de la portion de poutre creuse (3) est décroissante entre la première (11) et la seconde (12) extrémité de la portion de poutre creuse (3).

5. Elément absorbeur d'énergie selon l'une quelconque des revendications précédentes, dans lequel la portion de poutre creuse (3) comprend au moins une première (7) et une seconde zone (8) d'ailettes, au niveau desquelles la section droite (5) de la portion de poutre creuse s'étend vers l'extérieur du contour moyen fermé (6) de la portion de poutre en formant une première ailette (7) dans un premier plan géométrique de renfort sensiblement parallèle à l'axe (X) de la portion de poutre creuse, et en formant une seconde ailette (8) dans un second plan géométrique de renfort sensiblement parallèle à l'axe (X) de la portion de poutre creuse.

6. Elément absorbeur d'énergie selon l'une quelconque des revendications précédentes, comprenant au moins une portion de structure de coque (2) réalisée en matériau composite à matrice à base polymère et renforcé par des fibres longues.

7. Elément absorbeur d'énergie selon les revendications 5 et 6 combinées, comprenant deux demi-coques (9,10) en matériau composite, assemblées suivant au moins deux portions planes de chaque demi-coque, les portions planes d'une même demi-coque contribuant à former chacune une partie de l'épaisseur d'une zone d'ailette (7,8) différente.

8. Elément absorbeur d'énergie selon la revendication 7, dans lequel chaque demi-coque (9,10) est formée en matériau composite renforcé de fibres disposées en couches successives, dans lequel le nombre de couches de fibres de renfort diminue entre la première et la seconde extrémité de la poutre.

9. Elément absorbeur d'énergie selon l'une des revendications 7 ou 8, dans lequel une des demi-coques (10) recouvre l'autre demi-coque (9) de manière à fermer une des extrémités (12) de la portion de poutre creuse (3), et à former une première portion d'attache (16) superposant une épaisseur (14,15) de chacune des deux demi-coques (9,10) et débordant radialement par rapport à la portion de poutre creuse (3).

10. Elément absorbeur d'énergie selon l'une quelconque des revendications 8 à 9, dans lequel chacune des demi-coques (9, 10) présente une seconde portion d'attache (17) s'étendant radialement vers l'extérieur du contour fermé (6) de la portion (3) de poutre dans un même plan perpendiculaire à la direction de l'axe longitudinal (X).

## Patentansprüche

1. Aufprallenergie-Absorberelement (1), insbesondere für ein Kraftfahrzeug, das einen Schalenaufbau (2) enthält, der einen Teil in Form eines Hohlträgers (3) mit geschlossenem Querschnitt um eine Längsachse (X) des Trägerteils enthält, wobei die Gesamtmaterialfläche der Querschnitte (5) des Trägerteils lotrecht zur Längsachse zwischen einem ersten Ende (11) des Trägerteils und einem zweiten Ende (12) des Trägerteils (3) abnimmt,
**dadurch gekennzeichnet, dass** der Schalenaufbau zwei Halbschalen enthält, wobei eine der Halbschalen (9, 10) einen Teil lotrecht zur Längsachse und ein axiales Ende des Hohlträgerteils (3) bedeckend enthält, um dieses Ende des Hohlträgerteils zu schließen, und um außerdem einen Befestigungsteil (16) des Hohlträgerteils zu formen, der radial bezüglich des Hohlträgerteils übersteht, in dessen Bereich ein Wandteil jeder der zwei Halbschalen aufeinander liegen.

2. Energieabsorberelement nach Anspruch 1, wobei das quadratische Moment des Trägers in Biegung um mindestens eine erste Achse (Y, Z) zwischen einem ersten Ende (11) des Trägers und einem zweiten Ende (12) des Trägers abnimmt.

3. Energieabsorberelement nach einem der Ansprüche 1 oder 2, wobei der Hohlträgerteil im Wesentlichen eine Kegelstumpfform aufweist.

4. Energieabsorberelement nach einem der vorhergehenden Ansprüche, wobei die radiale Dicke (e) des Umrisses (6) des geschlossenen Querschnitts des Hohlträgerteils (3) zwischen dem ersten (11) und dem zweiten (12) Ende des Hohlträgerteils (3) abnimmt.

5. Energieabsorberelement nach einem der vorhergehenden Ansprüche, wobei der Hohlträgerteil (3) mindestens eine erste (7) und eine zweite Zone (8) von Rippen enthält, in deren Bereich der Querschnitt (5) des Hohlträgerteils sich nach außerhalb des geschlossenen mittleren Umrisses (6) des Trägerteils erstreckt, indem er eine erste Rippe (7) in einer ersten geometrischen Verstärkungsebene im Wesentlichen parallel zur Achse (X) des Hohlträgerteils formt, und indem er eine zweite Rippe (8) in einer zweiten geometrischen Verstärkungsebene im Wesentlichen parallel zur Achse (X) des Hohlträgerteils formt.

6. Energieabsorberelement nach einem der vorhergehenden Ansprüche, das mindestens einen Schalenaufbauteil (2) enthält, der aus Verbundmaterial mit einer Matrix auf der Basis von Polymer und durch lange Fasern verstärkt hergestellt ist.

7. Energieabsorberelement nach den Ansprüchen 5 und 6 in Kombination, das zwei Halbschalen (9, 10) aus Verbundmaterial enthält, die gemäß mindestens zwei ebenen Teilen jeder Halbschale zusammengebaut sind, wobei die ebenen Teile der gleichen Halbschale dazu beitragen, je einen Teil der Dicke einer anderen Rippenzone (7, 8) zu formen.

8. Energieabsorberelement nach Anspruch 7, wobei jede Halbschale (9, 10) aus Verbundmaterial geformt wird, das durch Fasern verstärkt wird, die in aufeinanderfolgenden Schichten angeordnet sind, wobei die Anzahl von Verstärkungsfaserschichten zwischen dem ersten und dem zweiten Ende des Trägers abnimmt.

9. Energieabsorberelement nach einem der Ansprüche 7 oder 8, wobei eine der Halbschalen (10) die andere Halbschale (9) bedeckt, um eines der Enden (12) des Hohlträgerteils (3) zu schließen, und um einen ersten Befestigungsteil (16) zu formen, der eine Dicke (14, 15) jeder der zwei Halbschalen (9, 10) überlagert und radial bezüglich des Hohlträgerteils (3) übersteht.

10. Energieabsorberelement nach einem der Ansprüche 8 bis 9, wobei jede der Halbschalen (9, 10) einen zweiten Befestigungsteil (17) aufweist, der sich radial zur Außenseite des geschlossenen Umrisses (6) des Trägerteils (3) in einer gleichen Ebene lotrecht zur Richtung der Längsachse (X) erstreckt.

## Claims

1. An impact-energy absorbing element (1), notably for a motor vehicle, comprising a shell structure (2) comprising a hollow-beam portion (3) having a closed section about a longitudinal axis (X) of the beam portion, the total material surface area of the straight sections (5) of the beam portion perpendicular to the longitudinal axis decreasing between a first end (11) of the beam portion and a second end (12) of the beam portion (3),
**characterized in that** the shell structure has two half-shells, one of the half-shells (9, 10) having a portion that is perpendicular to the longitudinal axis and that overlaps an axial end (12) of the hollow beam portion (3) such as to close said end of the hollow beam portion and to form an attachment portion (16) of the hollow beam portion projecting radially beyond the hollow beam portion, onto which a wall portion of each of the two half-shells is superposed.

2. The energy absorbing element as claimed in claim 1, in which the second moment of area of the beam when flexing about at least one first axis (Y, Z) decreases between a first end (11) of the beam and a second end (12) of the beam.

3. The energy absorbing element as claimed in one of claims 1 or 2, in which the hollow beam portion has a substantially tapered shape.

4. The energy absorbing element as claimed in any one of the preceding claims, in which the radial thickness (e) of the contour (6) of the closed section of the hollow beam portion (3) decreases between the first end (11) and the second end (12) of the hollow beam portion (3).

5. The energy absorbing element as claimed in any one of the preceding claims, in which the hollow beam portion (3) has at least one first fin zone (7) and one second fin zone (8), at which the straight section (5) of the hollow beam portion extends outwards from the closed median contour (6) of the beam portion to form a first fin (7) in a first geometric strengthening plane substantially parallel to the axis (X) of the hollow beam portion, and to form a second fin (8) in a second geometric strengthening plane substantially parallel to the axis (X) of the hollow beam portion.

6. The energy absorbing element as claimed in any one of the preceding claims, including at least one portion of the shell structure (2) made of a polymer-matrix composite material reinforced with long fibres.

7. The energy absorbing element as claimed in claims 5 and 6 combined, including two half-shells (9, 10) made of composite material and assembled along at least two flat portions of each half-shell, the flat portions of a given half-shell each helping to form a portion of the thickness of a different fin zone (7, 8).

8. The energy absorbing element as claimed in claim 7, in which the half-shell (9, 10) is made of composite material reinforced with fibres arranged in successive layers, in which the number of strengthening fibre layers decreases between the first and second end of the beam.

9. The energy absorbing element as claimed in one of claims 7 or 8, in which one of the half-shells (10) overlaps the other half-shell (9) to close one of the ends (12) of the hollow beam portion (3) and to form a first attachment portion (16) superposing a thickness (14, 15) of each of the two half-shells (9, 10) and projecting radially beyond the hollow beam portion (3).

10. The energy absorbing element as claimed in any one of claims 8 or 9, in which each of the half-shells (9, 10) has a second attachment portion (17) extending radially towards the outside of the closed contour (6) of the beam portion (3) in a single plane perpendicular to the direction of the longitudinal axis (X).
